# EUROPEAN PATENT SPECIFICATION

(11) **EP 1 084 049 B1**
(45) Date of publication and mention of the grant of the patent: **02.07.2003**
(21) Application number: 00901327.7
(22) Date of filing: 12.01.2000
(51) Int. Cl.: B60K 41/00, B60K 6/04

(54) **MOTORCYCLE WITH HYBRID PROPULSOR AND WITH BRAKING ENERGY RECOVERY**
MOTORRAD MIT HYBRIDANTRIEB UND MIT BREMSENERGIERÜCKGEWINNUNG
MOTOCYCLETTE AVEC SYSTEME DE PROPULSION HYBRIDE ET AVEC RECUPERATION DE L'ENERGIE DE FREINAGE

(30) Priority: 31.03.1999 IT PG990022
(43) Date of publication of application: 21.03.2001
(73) Proprietor: Siler S.R.L., 06049 Spoleto (IT); Valentini, Leonardo, 06049 Spoleto (IT)
(72) Inventor: VALENTINI, Leonardo, I-06049 Spoleto (IT)
(74) Representative: Iannone, Carlo Luigi
(86) International application number: IT0000012
(87) International publication number: WO00058121

(56) References cited:
- WO-A-99/14109
- US-A- 4 042 055
- US-A- 4 335 429
- US-A- 4 444 013
- US-A- 5 318 142
- US-A- 5 586 613
- US-A- 5 823 280

## Description

The present invention relates to a hybrid propulsor with braking energy recovery in motorcycles.

More particularly, the invention relates to a hybrid propulsor comprised of a thermal engine and of a reversible electric engine.

Still more particularly, the invention relates to a propulsor of the above kind with a very low environment impact,

At present, almost all the propulsor apparatuses provided on the motorcycles is comprised of two stroke engines, this choice deriving from the constructive advantages proper of this kind of choose, connected with the fast pickup during the acceleration. From WO-A-99/14 109 is known a motorcycle having a four-stroke engine and an electric motor.

The mixture feeding, even if under a separated phase mode, and the very big revolution variations during the operation, make this kind of motorization extremely polluting, as demonstrate by many tests carried out since a long time.

The optimum solution for the polluting exhausts would be the use of electrical engines, already adopted by many manufacturers, this solution, however, still having many critical aspects. Particularly, they have a short endurance, require a long stop of the vehicle to recharge the accumulator, involve a remarkable increase of the weight, more maintenance (reintegration of the battery solution), a penalisation of the driving features (low power available at the wheel).

The adoption of a hybrid system (thermal engine plus electric engine) with a low environment impact has been the subject of many studies and constructive applications, particularly on motor vehicles.

All the solutions realised are characterised by a consistent increase of the weight of the vehicle, as well as an increase of the costs.

In view of the above, the Applicant suggests a motorcycle with a hybrid propulsor able to overcome the above drawbacks, being very compact and with a low weight.

It is therefore the specific object of the present invention to provide a motorcycle with a hybrid propulsor with braking energy recovery, comprising a four stroke engine, a reversible electric engine, coupled with said four stroke engine by synchronised couplings, energy accumulation means, coupled with said reversible electric engine, a processor and a control circuit for the propulsor operation.

Preferably, according to the invention, said accumulation means are comprised of ultra-condensers having a high accumulation capability, integrating the batteries, chosen on the basis of their fast charge and discharge features, controlled and piloted by the electronic processor.

Always according to the invention, said electric engine is a permanent magnet direct current electric engine, particularly in a reversible configuration (engine - dynamo) making it possible either the production of electric energy to be accumulated, and the availability of mechanical power on the wheel axis.

Still according to the invention, said electric control circuit works for variable time intervals and is able to release the requires amount of energy from the accumulation means to the electric engine for the phases when a higher power is necessary (acceleration and high slopes).

Furthermore, according to the invention, said couplings are synchronised electromagnetic couplings for the connection between the reversible electrical engine and the thermal engine, piloted by the control circuit.

Always according to the invention, said propulsor has a by-pass function of the control circuit, so that it is possible to obtain a purely electric or thermal propulsion, as well as the emergency propulsion that can be activated in case of component failure.

Still according to the invention, a wave resonance synchronised compressor can be provided for the intake air of the thermal engine able to ensure a high stability when delivering the power to the shaft.

The present invention will be now described, for illustrative but not limitative purposes, according to its preferred embodiments, with particular reference to the figures of the enclosed drawings, wherein:
figure 1 is a schematic view of a propulsor according to the invention;
figure 2 shows a scheme of the electric control circuit of the propulsor of figure 1; and

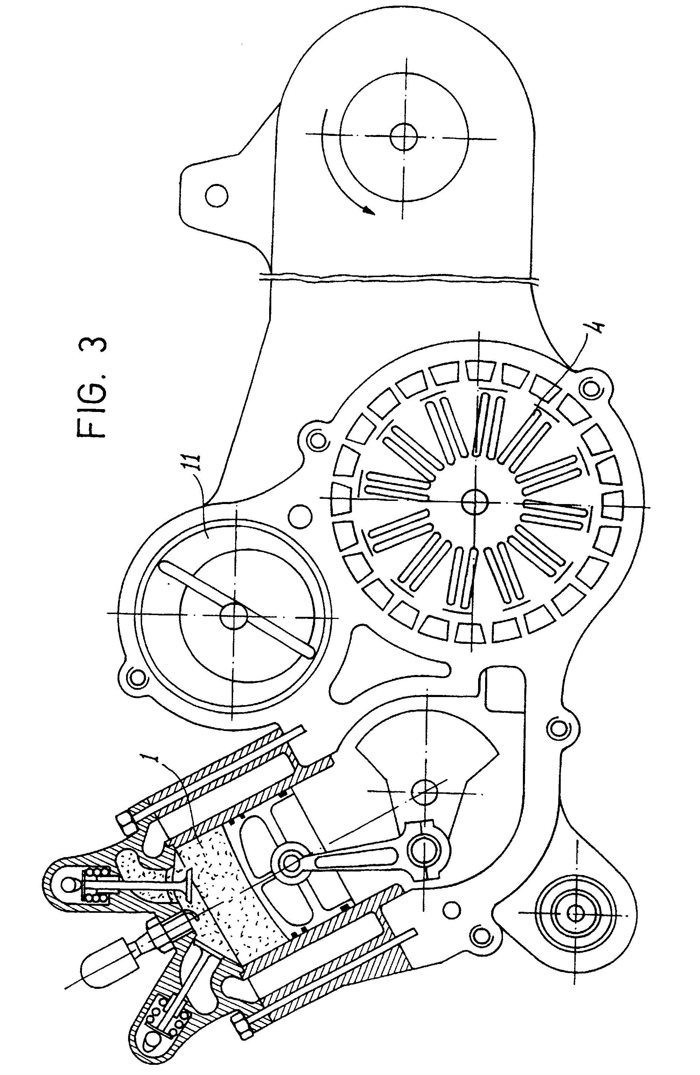

figure 3 shows an embodiment of the propulsor according to the invention.

Generally speaking, the propulsor according to the invention is comprised of a four stroke endothermic engine, with a permanent magnet reversible electric engine, suitably realised, serially mounted by suitable synchronised couplings.

The whole propulsor is controlled by an electronic processor able to elaborate a flexible program to use the energy. The use of this traction system for motorcycles and motorcycles allows to recover a remarkable part of the braking energy, making it available during the acceleration phases.

During the frequent stops in the urban journeys, it is possible a remarkable accumulation of electric energy by the use of controlled fast charge and discharge ultra-condensers, which is usable as power increase in the following phases.

The inner combustion engine in any operation condition is not subjected to meaningful fuel overfeeding, always working under optimum conditions with very low polluting emissions.

The propulsor as a whole (thermal engine + electric engine with accumulation on ultra-condensers and batteries), allows a reduction of about 90% of environment pollution with respect to a traditional two stroke engine propulsor.

Coming now to observe all the figures of the enclosed drawings, a four stroke engine 1 powered by the synchronised 2, 3 the permanent magnet reversible electric engine 4 serving also as starting engine for the thermal engine 1.

The electronic processor 5 controls the whole system under the energetic point of view.

After the start, the engine 4 is able to develop about the double of its nominal power, more than sufficient to start the vehicle under normal conditions.

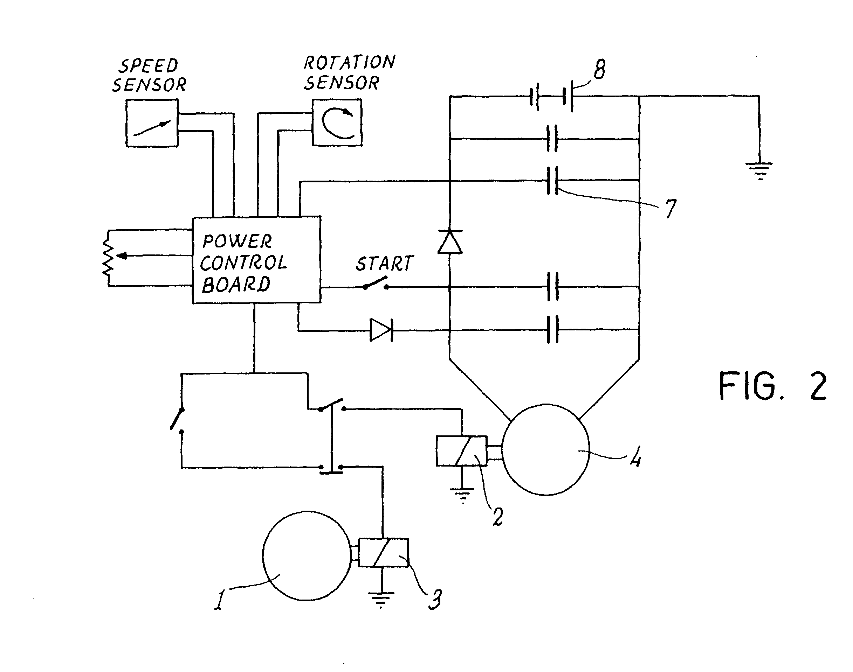

When during the run a power is required on the wheel 6 higher than the one developed by the thermal engine 1, the joined action of the electric engine 4 starts, taking the energy first from the ultra-condensers 7 (see figure 2) and than also from the batteries 8, making it available a real power at the wheel 6 higher than 60% than the power installed in the thermal engine.

During the braking phases or the descent runs, instead acting on the brakes, thus dispersing heat, the electric engine 4, which is reversible, acts as generator sending part of the energy to the accumulation devices 7 and 8.

The propulsor according to the invention is arranged before hand to carry out also a by-pass of the thermal engine + electric engine coupling, so that it is possible a purely electric powering (with a limited power) or a purely thermal powering.

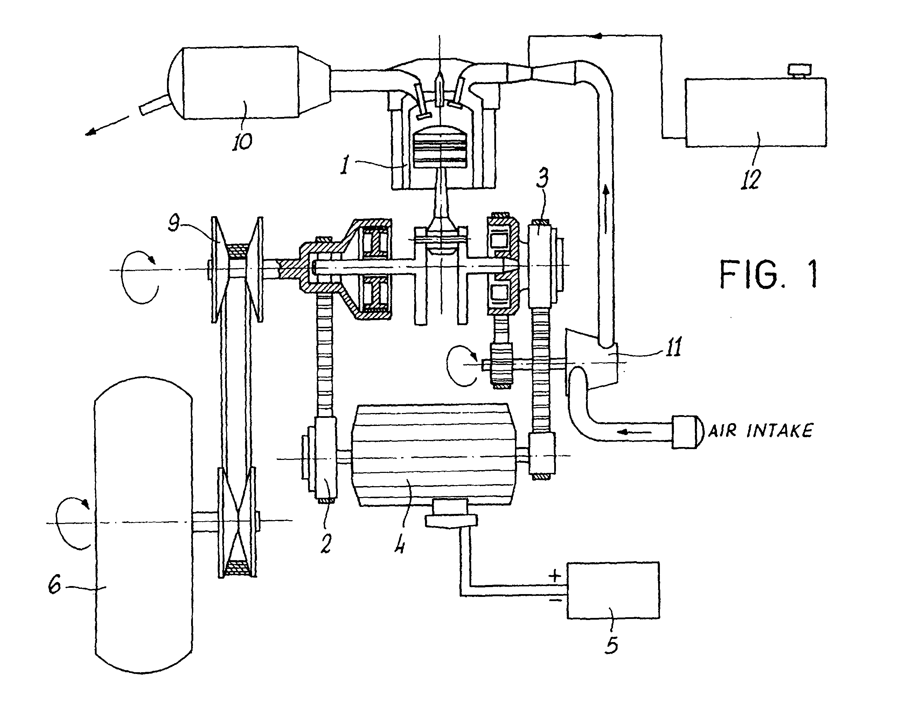

In figure 1, by the reference number 9 the speed change gear is indicated, by the reference number 10 the exhaust device is indicated, while the reference number 11 indicates the compressor.

Engine 1 is fed by oxygenated fuel, contained within the tank 12, in order to reduce the pollution.

The most innovative feature of the propulsor according to the invention, is the capability of managing and the high efficiency degree of the elaboration and control system retro-driven by the use of ultra-condensers 7, presently comprising the only accumulation device operating very quickly.

The propulsor according to the invention allows as a whole a considerable gear pickup, even using a four stroke thermal engine 1 (for the well known advantages under the ecological point of view).

This result derives from the exploitation, for determined time intervals, a supplemental power deriving from the electric engine 4.

This kind of hybrid motorization allows a brilliant guide such that obtained using very powerful two stroke engines, which are highly polluting.

The energy of the electric engine 4 arrives from the accumulators 7, 8, mainly charged during the stop of the urban run.

The propulsor according to the invention has a flexible behaviour in the various situations, even constructively being a propulsor very similar to the traditional one.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Motorcycle having a hybrid propulsor with braking energy recovery, comprising a four stroke engine, a reversible electric engine, coupled with said four stroke engine by synchronised couplings, energy accumulation means, coupled with said reversible electric engine, a processor and a control circuit for the propulsor operation.

2. Motorcycle having a hybrid propulsor according to claim 1, **characterised in that** said accumulation means are comprised of ultra-condensers having a high accumulation capability, integrating the batteries.

3. Motorcycle having a hybrid propulsor according to one of the preceding claims, **characterised in that** said electric engine is a permanent magnet direct current electric engine, particularly in a reversible configuration (engine-dynamo) making it possible either the production of electric energy to be accumulated, and the availability of mechanical power on the wheel axis.

4. Motorcycle having a hybrid propulsor according to one of the preceding claims, **characterised in that** said electric control circuit works for variable time intervals and is able to release the requires amount of energy from the accumulation means to the electric engine for the phases when a higher power is necessary (acceleration and high slopes).

5. Motorcycle having a hybrid propulsor according to one of the preceding claims, **characterised in that** said couplings are synchronised electromagnetic couplings for the connection between the reversible electrical engine and the thermal engine, piloted by the control circuit.

6. Motorcycle having a hybrid propulsor according to one of the preceding claims, **characterised in that** said propulsor has a by-pass function of the control circuit, so that it is possible to obtain a purely electric or thermal propulsion, as well as the emergency propulsion that can be activated in case of component failure.

7. Motorcycle having a hybrid propulsor according to one of the preceding claims, **characterised in that** a wave resonance synchronised compressor can be provided for the intake air of the thermal engine able to ensure a high stability when delivering the power to the shaft.

## Patentansprüche

1. Motorrad mit Hybridantrieb und Bremsenergierückgewinnung, bestehend aus einer Vier-Zylinder-Maschine, einer umschaltbaren elektrischen Maschine, die mit der Vier-Zylinder-Maschine durch synchronisierte Kupplungen verbunden ist, Energiespeichermitteln, die mit der genannten umschaltbaren elektrischen Maschine verbunden sind, einem Prozessor und einer Steuerschaltung für den Antriebsprozess.

2. Motorrad mit Hybridantrieb und Bremsenergierückgewinnung nach Anspruch 1, **dadurch gekennzeichnet, dass** die Energiespeichermittel Ultra-Kondensatoren umfassen, welche eine hohe Speicherkapazität aufweisen, und die Batterien integrieren.

3. Motorrad mit Hybridantrieb und Bremsenergierückgewinnung nach einem der vorgenannten Ansprüche, **dadurch gekennzeichnet, dass** die elektrische Maschine eine Permanent-Gleichstrommaschine, insbesondere in einer umschaltbaren Konfiguration (Maschine - Dynamo), ist, die es ermöglicht, sowohl elektrische Energie zur Speicherung zu produzieren als auch mechanische Leistung auf die Radachse zur Verfügung zu stellen.

4. Motorrad mit Hybridantrieb und Bremsenergierückgewinnung nach einem der vorgenannten Ansprüche, **dadurch gekennzeichnet, dass** die elektrische Steuerschaltung in variablen Zeitintervallen arbeitet und fähig ist, in den Phasen, in denen höhere Leistung erforderlich ist (Beschleunigung und starke Steigungen), die erforderliche Energiemenge von der Speichereinheit zur elektrischen Maschine abzugeben.

5. Motorrad mit Hybridantrieb und Bremsenergierückgewinnung nach einem der vorgenannten Ansprüche, **dadurch gekennzeichnet, dass** die Kupplungen synchronisierte elektromagnetische Kupplungen sind zur Verbindung zwischen der umschaltbaren elektrischen Maschine und der Wärmekraftmaschine, welche durch die Steuerschaltung gesteuert ist.

6. Motorrad mit Hybridantrieb und Bremsenergierückgewinnung nach einem der vorgenannten Ansprüche, **dadurch gekennzeichnet, dass** der Antrieb eine Beipass-Funktion der Steuerschaltung aufweist, sodass es möglich ist, sowohl einen reinen elektrischen oder thermischen Antrieb als auch einen Notantrieb zu erzielen, der im Fall eines Bauteilfehlers aktiviert werden kann.

7. Motorrad mit Hybridantrieb und Bremsenergierückgewinnung nach einem der vorgenannten Ansprüche, **dadurch gekennzeichnet, dass** ein wellenresonanzsynchronisierter Kompressor für die Ansaugluft der Wärmekraftmaschine vorgesehen sein kann, der eine hohe Stabilität während der Leistungsabgabe an die Welle sicherstellt.

## Revendications

1. Motocyclette comportant un système de propulsion hybride avec récupération d'énergie de freinage, comprenant un moteur à quatre temps, un moteur électrique réversible, couplé avec ledit moteur à quatre temps par des couplages synchronisés, des moyens d'accumulation d'énergie, couplés avec ledit moteur électrique réversible, un processeur et un circuit de commande pour le fonctionnement du système de propulsion.

2. Motocyclette comportant un système de propulsion hybride selon la revendication 1, **caractérisée en ce que** lesdits moyens d'accumulation sont constitués d'ultra-condensateurs ayant une grande capacité d'accumulation, intégrant les batteries.

3. Motocyclette comportant un système de propulsion hybride selon l'une des revendications précédentes, **caractérisée en ce que** ledit moteur électrique est un moteur électrique à courant continu et à aimant permanent, en particulier dans une configuration réversible (moteur-dynamo) permettant, soit de produire de l'énergie électrique destinée à être accumulée, soit de disposer de puissance mécanique sur l'axe des roues.

4. Motocyclette comportant un système de propulsion hybride selon l'une des revendications précédentes, **caractérisée en ce que** ledit circuit de commande électrique travaille pendant des intervalles de temps variables et peut libérer la quantité d'énergie requise à partir des moyens d'accumulation pour le moteur électrique pour les phases auxquelles une puissance supérieure est nécessaire (accélération et fortes pentes).

5. Motocyclette comportant un système de propulsion hybride selon l'une des revendications précédentes, **caractérisée en ce que** lesdits couplages sont des couplages électromagnétiques synchronisés pour la connexion entre le moteur électrique réversible et le moteur thermique, pilotés par le circuit de commande.

6. Motocyclette comportant un système de propulsion hybride selon l'une des revendications précédentes, **caractérisée en ce que** ledit système de propulsion a une fonction de dérivation du circuit de commande, de telle sorte qu'il est possible d'obtenir une propulsion purement électrique ou thermique, ainsi que la propulsion d'urgence qui peut être activée dans le cas de panne d'un composant.

7. Motocyclette comportant un système de propulsion hybride selon l'une des revendications précédentes, **caractérisée en ce qu'**un compresseur synchronisé à résonance d'onde peut être utilisé pour l'air d'admission du moteur thermique, pouvant assurer une grande stabilité lors de la délivrance de la puissance à l'arbre.
